(19) Europäisches Patentamt / European Patent Office / Office européen des brevets

(11) **EP 3 056 123 A1**

(12) **DEMANDE DE BREVET EUROPEEN**

(43) Date de publication:
**17.08.2016 Bulletin 2016/33**

(51) Int Cl.:
*A47J 37/06* (2006.01)     *A23L 5/10* (2016.01)
*A22C 17/10* (2006.01)

(21) Numéro de dépôt: **16153940.8**

(22) Date de dépôt: **02.02.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **12.02.2015 FR 1551168**

(71) Demandeur: **Euralis Gastronomie**
**65700 Maubourguet (FR)**

(72) Inventeur: **BRIAND, Gilles**
**22440 Tremusion (FR)**

(74) Mandataire: **Peguet, Wilfried**
**Ipsilon**
**Le Centralis**
**63 Avenue du Général Leclerc**
**92340 Bourg-la-Reine (FR)**

(54) **PROCÉDÉ DE MARQUAGE D'UN PRODUIT ALIMENTAIRE**

(57) La présente invention concerne un procédé de marquage d'un produit alimentaire (1) comprenant l'étape de traiter thermiquement au moins une partie de la surface extérieure du produit alimentaire à l'aide d'une flamme (2) formée par le mélange d'un combustible et d'un comburant, caractérisé en ce que le pouvoir calorifique du combustible est d'au moins 3,0 kWh/m$^3$.

Fig. 1

EP 3 056 123 A1

**Description**

La présente invention se rapporte à un procédé de marquage d'un produit alimentaire.

Elle s'applique typiquement, mais non exclusivement, aux domaines des produits alimentaires comprenant de la matière grasse, qu'ils soient crus ou cuits, notamment du type foie gras ou canard.

Il est connu du document WO 2011/157921 un procédé de pré-cuisson en surface de produits alimentaires consistant à mettre en contact la surface du produit avec une flamme oxyhydrique du type $H_2/O_2$ ou $H_2$/air.

Toutefois, le dihydrogène ($H_2$) est un gaz classé extrêmement inflammable. De ce fait, ce procédé utilisant une flamme à base de dihydrogène est relativement dangereux à mettre en oeuvre.

Le but de la présente invention est de pallier les inconvénients des techniques de l'art antérieur en proposant un procédé de préparation d'un produit alimentaire facile et non dangereux à mettre en oeuvre, et n'altérant pas les propriétés gustatives du produit alimentaire, tout en présentant un très bon rendement de production.

La présente invention a pour objet un procédé de marquage d'un produit alimentaire comprenant l'étape de traiter thermiquement au moins une partie de la surface extérieure du produit alimentaire à l'aide d'une flamme formée par le mélange d'un combustible et d'un comburant, caractérisé en ce que le pouvoir calorifique du combustible est d'au moins 3,0 kWh/m$^3$.

De préférence, dans le procédé de l'invention, le rapport $\dfrac{Vcomburant}{Vcombustible}$ est strictement supérieur à 1,0, avec Vcomburant étant le pourcentage en volume de comburant et Vcombustible étant le pourcentage en volume de combustible.

La présente invention permet avantageusement d'éviter l'utilisation du dihydrogène ($H_2$) dans le procédé de marquage du produit alimentaire. Le procédé de l'invention évite ainsi toute manipulation dangereuse liée à l'utilisation du dihydrogène, et en est moins coûteuse.

En outre, le procédé présente également l'avantage de limiter significativement la perte de poids du produit alimentaire liée à la fonte de la matière grasse pouvant être constitutive en partie du produit alimentaire, et ainsi permet d'obtenir un meilleur rendement de production.

Ce rendement de production est d'ailleurs amélioré par le fait que le traitement thermique mis en oeuvre dans l'invention est un traitement rapide, qui permet de garantir de bonnes propriétés organoleptiques, notamment gustatives, au produit alimentaire traité.

En outre, grâce au procédé de l'invention, les résidus carbonés susceptibles de se déposer à la surface du produit alimentaire une fois traité thermiquement sont limités de façon significative, voire évités totalement.

Enfin, une conséquence directe du procédé de préparation est de pouvoir limiter de façon significative, voire supprimer totalement, les bactéries susceptibles d'être présentes à la surface du produit alimentaire à traiter.

Le procédé de marquage de l'invention a par ailleurs l'avantage de pouvoir traiter thermiquement au moins en partie la surface extérieure du produit alimentaire, ou la totalité de la surface extérieure du produit alimentaire, sans modifier structurellement le coeur dudit produit. Ainsi si le produit alimentaire est cru ou cuit avant ledit traitement thermique, il restera respectivement cru ou cuit après ledit traitement thermique, excepté à sa surface qui aura subit une modification structurelle du fait du traitement thermique.

Le pouvoir calorifique

Le pouvoir calorifique du combustible est supérieur au pouvoir calorifique du dihydrogène, le pouvoir calorifique de ce dernier étant égal à 2,8 kWh/m$^3$.

La Demanderesse a découvert de façon surprenante qu'un pouvoir calorifique d'au moins 3,0 kWh/m$^3$ pour le combustible de la flamme permet de provoquer une fonte suffisante de la matière grasse pouvant être constitutive du produit alimentaire lors du procédé de marquage, tout en se passant de l'utilisation du dihydrogène. La fonte de la matière grasse permet avantageusement d'obtenir la réaction chimique dite de Maillard entre les sucres et les protéines contenus notamment dans la matière grasse.

Plus particulièrement, le pouvoir calorifique du combustible peut être d'au moins 5,0 kWh/m$^3$, et de préférence d'au moins 8,0 kWh/m$^3$.

Le pouvoir calorifique d'un combustible est l'enthalpie de réaction de combustion par unité de masse, notamment à une température de zéro degré Celsius et sous une pression de 1013 mbar. En d'autres termes, le pouvoir calorifique d'un combustible est l'énergie dégagée sous forme de chaleur par la réaction de combustion complète d'une unité de combustible.

Dans la présente invention, le pouvoir calorifique est plus particulièrement le pouvoir calorifique dit « inférieur » (PCI), qui est la quantité de chaleur dégagée par la combustion complète d'une unité de combustible, la vapeur d'eau étant supposée non condensée et la chaleur non récupérée.

A titre d'exemple, le méthane a un pouvoir calorifique (inférieur) de 9,4 kWh/m$^3$, et le propane a un pouvoir calorifique (inférieur) de 24,0 kWh/m$^3$.

La flamme

La flamme de l'invention est typiquement une flamme formée par le mélange d'un combustible et d'un comburant, ce type de technique étant bien connue de l'homme du métier.

La flamme est classiquement formée à la sortie ou extrémité d'un brûleur (i.e. orifice de sortie), notamment appelée zone de combustion, la flamme étant alimentée par le mélange de combustible et de comburant.

Le brûleur peut comprendre typiquement une première alimentation pour le combustible, et une deuxième alimentation pour le comburant. La première et la deuxième alimentations peuvent classiquement être des tuyaux ayant respectivement des orifices de sortie, de préférence de forme circulaire, avec des diamètres identiques ou différents.

Dans un mode de réalisation particulier, le rapport $\frac{Vcomburant}{Vcombustible}$ peut être strictement supérieur à 1,0, afin d'avoir un excès de comburant par rapport au combustible, et ainsi optimiser les propriétés désirées.

De préférence, $\frac{Vcomburant}{Vcombustible} \geq 2,0$, de préférence $\frac{Vcomburant}{Vcombustible} \geq 4,0$, et de façon particulièrement préférée $\frac{Vcomburant}{Vcombustible} \geq 5,0$.

Le pourcentage en volume de comburant (Vcomburant) et le pourcentage en volume de combustible (Vcombustible) peuvent être déterminés selon la méthode expliquée ci-dessous. $\frac{Vcomburant}{Vcombustible} = \frac{Q\,comburant}{Q\,combustible}$ où Qcomburant et Qcombustible sont les débits volumiques respectifs du comburant et du combustible, en m$^3$/seconde.

Qcomburant et Qcombustible sont définis comme suit :

$$Qcomburant = \frac{1}{\rho comburant} \times \pi \times Rcomburant^2 \times \frac{Pcomburant^2}{1,013^2} \times \rho comburant \times Clcomburant \times Ycomburant$$

$$Qcombustible = \frac{1}{\rho combustible} \times \pi \times Rcombustible^2 \times \frac{Pcombustible}{1,013} \times \rho combustible \times Clcombustible \times Ycombustible$$

avec :

- $\rho$comburant : la masse volumique du comburant (en kg/m$^3$) ;
- $\rho$combustible : la masse volumique du combustible (en kg/m$^3$) ;
- Rcomburant : le rayon de l'orifice de sortie du comburant (en m) ;
- Rcombustible : le rayon de l'orifice de sortie du combustible (en m) ;
- Pcomburant : la pression absolue du comburant (en bar) ;
- Pcombustible : la pression absolue du combustible (en bar) ;
- Clcomburant : la limite supérieure de la vitesse de sortie du comburant (en m/s) ;
- Clcombustible : la limite supérieure de la vitesse de sortie du combustible (en m/s) ;
- Ycomburant : la fonction entre la pression en aval (qui est égale à la pression atmosphérique, soit 1,013 bar) et la pression initiale du comburant (qui est égale à Pcomburant) ; et
- Ycombustible : la fonction entre la pression en aval (qui est égale à la pression atmosphérique, soit 1,013 bar) et la pression initiale du combustible (qui est égale à Pcombustible).

Dans la présente invention, le comburant est de préférence sous forme d'un gaz à température ambiante (25°C), et de façon particulièrement préférée sous forme d'un gaz à 10°C. Il peut être par exemple du dioxygène ou oxygène ($O_2$). Lorsque le comburant est le dioxygène, on peut parler d'une flamme suroxygénée quand le comburant est en excès par rapport au combustible.

Le comburant peut provenir de dioxygène pur ou d'un mélange de dioxygène avec au moins un autre gaz.

Il peut provenir de l'air, qui comprend classiquement environ 20% en volume de dioxygène, ou d'un mélange d'air et de dioxygène (i.e. air enrichi en dioxygène) afin d'augmenter le pourcentage en volume de dioxygène dans l'air.

Le combustible de l'invention est de préférence sous forme d'un gaz à température ambiante (25°C), et de façon particulièrement préférée sous forme d'un gaz à 10°C. Il peut être par exemple choisi parmi les alcanes.

A titre d'exemple, le combustible peut être choisi parmi le méthane, le propane, le butane, et un de leurs mélanges. Le gaz préféré est le méthane puisque la combustion avec le comburant induit un dégagement de dioxyde de carbone ($CO_2$) limité de façon significative.

Le combustible peut provenir d'un gaz pur ou d'un mélange de plusieurs gaz.

Il peut provenir du gaz naturel, qui peut comprendre environ 90% en volume de méthane. Le gaz naturel peut avoir typiquement un pouvoir calorifique (inférieur) de l'ordre de 8-11 kWh/m$^3$.

Le produit alimentaire

Le produit alimentaire de l'invention est de préférence un produit alimentaire comprenant de la matière grasse, cette matière grasse étant susceptible de fondre au moins en partie lors du traitement thermique pour former le marquage du produit alimentaire.

Le produit alimentaire peut comprendre au moins 10% en poids de matière grasse, de préférence au moins 20% en poids de matière grasse, et de façon particulièrement préférée au moins 50 % en poids de matière grasse, par rapport au poids total du produit alimentaire.

Le produit alimentaire à traiter peut être frais ou surgelé.

A titre d'exemple, le produit alimentaire peut être choisi parmi du foie gras, du canard, et leur combinaison. Le foie gras peut être sous forme d'une escalope, et le canard peut être sous forme de magret.

L'étape de traitement thermique

Le marquage du produit alimentaire consiste à colorer de façon homogène au moins en partie, et de préférence en totalité, la surface extérieure du produit alimentaire. Le coeur du produit alimentaire n'est ainsi pas impacté par le traitement thermique.

En effet, toute ou partie de la surface extérieure du produit alimentaire va être modifiée structurellement, contrairement au coeur du produit alimentaire. De ce fait, lorsque le produit alimentaire avant marquage est cru, il reste cru à coeur après le traitement thermique, avec une couche colorée homogène à sa surface extérieure.

Le traitement thermique permet de réaliser une transformation chimique sur toute ou partie de la surface extérieure du produit alimentaire, cette transformation chimique étant notamment du type réaction de Maillard bien connue de l'homme du métier. La réaction de Maillard est la réaction chimique entre les sucres et les protéines contenus notamment dans la matière grasse.

A titre d'exemple, la surface extérieure ainsi traitée du produit alimentaire peut avoir une épaisseur d'au plus 2,0 mm, et de préférence d'au plus 1,0 mm.

Selon le procédé de l'invention, la flamme est de préférence directement en contact physique avec la partie de la surface du produit alimentaire à traiter.

Plus particulièrement, le produit alimentaire est mis en contact avec la flamme afin d'obtenir les effets désirés. Le produit alimentaire passe ainsi dans la flamme ou en d'autres termes dans la hauteur Hf de la flamme.

La hauteur Hf de la flamme est définie comme étant la distance allant de l'extrémité de sortie de la flamme du brûleur (zone la plus chaude) à la pointe de la flamme (zone la moins chaude).

De préférence, la flamme peut être en contact avec le produit alimentaire dans une zone Zf positionnée dans la hauteur Hf de la flamme, allant d'une hauteur H1 à une hauteur H2, par rapport à la sortie du brûleur. L'amplitude de la zone Zf est notamment égale à H2 - H1.

Dans un mode de réalisation particulier, la zone Zf peut aller de 20 à 100% de la hauteur Hf (i.e. H1 = 0,2 x Hf et H2 = 1 x Hf), de préférence de 30 à 80% de la hauteur Hf (i.e. H1 = 0,3 x Hf et H2 = 0,8 x Hf), et de façon particulièrement préférée de 30 à 70% de la hauteur Hf (i.e. H1 = 0,3 x Hf et H2 = 0,7 x Hf), par rapport à la sortie du brûleur.

A titre d'exemple, pour une hauteur Hf de flamme mesurant 200 mm à partir de la sortie du brûleur, le produit alimentaire peut être en contact avec la flamme dans une zone Zf allant de 60 mm (H1) à 140 mm (H2) de Hf, « 60 mm » correspondant à 30% de Hf et « 140 mm » correspondant à 70% de Hf. L'amplitude de la zone Zf est égale à 80 mm.

La température de la flamme peut être comprise entre 800 et 2000°C.

Comme mentionné ci-avant, la flamme peut être notamment formée à la sortie ou extrémité d'un brûleur alimenté par le mélange de combustible et de comburant.

Afin de limiter significativement, voire d'éviter la calcination des extrémités ou arêtes du produit alimentaire, la totalité de la surface délimitée par la sortie du brûleur recouvre au plus la totalité, et de préférence au plus 50%, de la surface disponible extérieure du produit alimentaire à traiter.

Ainsi, la flamme est positionnée au niveau du produit alimentaire de sorte à obtenir les effets souhaités.

Plus particulièrement, l'axe longitudinal de la flamme peut être typiquement positionné au niveau du centre de symétrie du produit alimentaire.

Lorsqu'au moins deux produits alimentaires sont traités thermiquement selon le procédé de l'invention, ces deux produits sont mis en contact physique bord à bord, l'un avec l'autre. Ainsi, le « léchage » de la flamme est continu le long de ces deux produits alimentaires et la flamme ne surcuit pas les arrêtes ou bords en commun des deux produits alimentaires à traiter thermiquement.

En outre, le temps d'exposition du produit alimentaire à la flamme est suffisant pour permettre d'obtenir les effets désirés. A titre d'exemple, il peut aller de 2 secondes à 20 secondes, et de préférence de 2 secondes à 10 secondes.

L'homme du métier pourra facilement faire varier différents paramètres afin d'optimiser le traitement thermique et le rendement de production du procédé de l'invention. A titre d'exemple, il pourra jouer sur au moins l'un des paramètres suivants :

- le temps d'exposition du produit alimentaire à la flamme,
- la hauteur de la flamme,
- la surface de contact entre la flamme et le produit alimentaire.

Au niveau de l'industrialisation, le produit alimentaire peut être déposé sur un support, tel que par exemple un ruban, comprenant notamment des ouvertures.

Lorsque la flamme est positionnée au-dessus du produit alimentaire, lesdites ouvertures permettent de laisser passer la flamme lorsque le produit alimentaire n'est plus exposé à la flamme, le produit alimentaire étant intercalé entre le support et le brûleur.

Lorsque la flamme est positionnée en-dessous du produit alimentaire, lesdites ouvertures permettent d'être directement en contact physique avec la flamme, le support étant intercalé entre le produit alimentaire et le brûleur. En d'autres termes, les ouvertures permettent notamment à la flamme d'un brûleur d'être en contact direct avec le produit alimentaire lorsque le brûleur est placé en-dessous du support, le produit alimentaire étant positionné sur le support.

Le support peut être mobile ou non. Le support mobile permet de faire défiler les produits alimentaires à travers une ou des flammes selon le procédé de l'invention. On peut alors parler de convoyeur.

Dans ce cas, les produits alimentaires peuvent être alignés selon leur axe de symétrie, formant une chaîne de produits sur le support mobile. Chaque produit alimentaire est en contact physique avec deux autres produits alimentaires qui lui est adjacent, excepté aux extrémités de la chaîne de produits.

Le support est de préférence résistant à des températures de plus de 800°C, et de préférence de plus de 1000°C, pendant le temps de l'exposition à la flamme du produit alimentaire.

A titre d'exemple, le support mobile peut être un tapis à maille de marque Flatflex, dont le métal est en inox 316 L (avec une maille d'un diamètre de 1,6 mm). Ce métal est suffisamment résistant à une flamme de 1000°C, avec une vitesse de défilement d'au moins 1 m/minute.

Dans un mode de réalisation particulier, l'arrêt du support mobile permet de couper automatiquement l'alimentation de la ou des flamme(s).

Un ou plusieurs brûleurs alimentés par le mélange de combustible et de comburant selon le procédé de l'invention peuvent être disposés d'un seul côté du support mobile ou de part et d'autre du support mobile, le ou les brûleurs étant disposés de sorte que leur flamme soit directement en contact physique avec le produit alimentaire. En d'autres termes, le ou les brûleurs peuvent être disposés en-dessous et/ou au-dessus du ou des produits alimentaires à traiter thermiquement.

Les brûleurs peuvent en outre être alignés, et positionnés à égale distance les uns des autres. La distance entre chaque brûleur peut être de l'ordre de quelques dizaine de centimètres.

Le procédé de marquage de l'invention peut être réalisé à température ambiante (25°C) ou à une température inférieure à 25°C. De préférence, la température à laquelle le traitement thermique est réalisé est de 10°C.

Le procédé de marquage de l'invention peut comprendre en outre une étape préalable au traitement thermique consistant à positionner au moins en partie sur la surface extérieure du produit alimentaire à traiter thermiquement, un masque de marquage avec au moins une ouverture.

Ainsi, le masque de marquage peut être intercalé entre la flamme et le produit alimentaire, l'ouverture du masque de marquage permettant à la flamme d'être directement en contact physique avec le produit alimentaire lors de son traitement thermique.

Le masque de marquage peut être réalisé en un matériau résistant à des températures de plus de 800°C, et de préférence de plus de 1000°C, pendant le temps de l'exposition à la flamme du produit alimentaire. A titre d'exemple, le masque de marquage peut être un masque en inox.

D'autres caractéristiques et avantages de la présente invention apparaîtront à la lumière de la description d'exemples non limitatifs d'un procédé de marquage selon l'invention, faits en référence à l'unique figure.

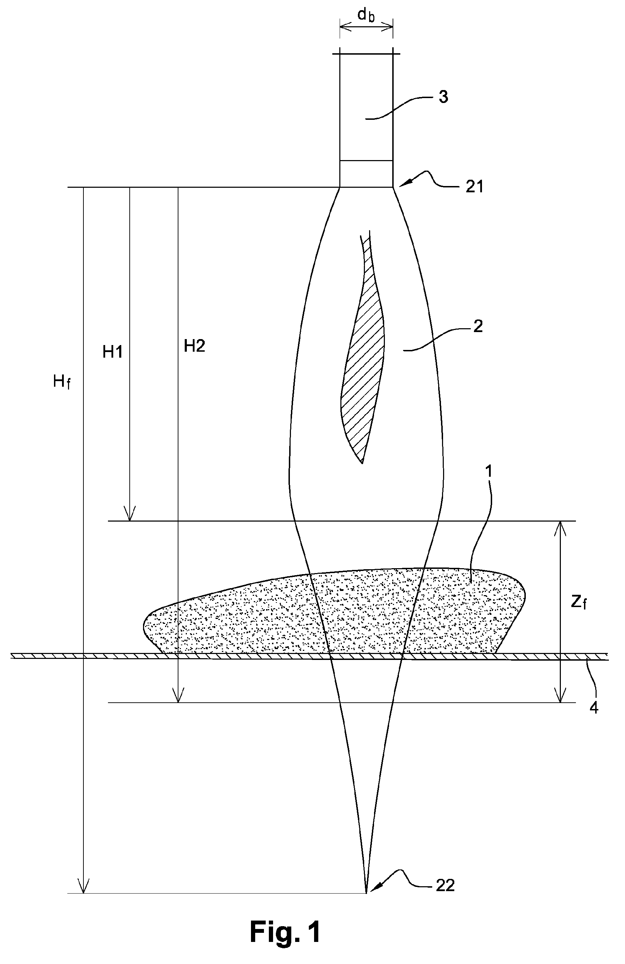

La figure 1 représente une vue schématique d'une flamme directement en contact avec le produit alimentaire, selon le procédé de l'invention.

Pour des raisons de clarté, seuls les éléments essentiels pour la compréhension de l'invention ont été représentés de manière schématique, et ceci sans respect de l'échelle.

La figure 1 représente une vue schématique d'un produit alimentaire 1 traité thermiquement à l'aide d'une flamme 2 directement en contact physique avec ledit produit alimentaire 1, selon le procédé de l'invention.

La flamme 2, formée par le mélange du comburant et du combustible, sort d'un brûleur 3, avec une hauteur Hf. La hauteur Hf de la flamme 2 est définie comme étant la distance allant de l'extrémité 21 de sortie de la flamme du brûleur (zone la plus chaude) à la pointe de la flamme 22 (zone la moins chaude).

La flamme 2 est en contact avec le produit alimentaire 1 dans une zone Zf de la hauteur Hf, cette zone Zf allant d'une hauteur H1 à une hauteur H2 (i.e. amplitude de la zone Zf = H2 - H1).

Le produit alimentaire 1 d'une forme sensiblement allongée est positionné sur un support 4 de type convoyeur à maille inox. Le support 4 peut avantageusement être mobile, avec une vitesse constante de défilement, pour permettre à l'ensemble du produit alimentaire de passer à l'intérieur (i.e. traverser) de la flamme 2 dans la zone Zf.

Le support 4 comprend des ouvertures dans toute son épaisseur, réparties de façon constante sur toute la longueur du ruban.

La flamme 2 est positionnée au-dessus du produit alimentaire 1, de sorte que le produit alimentaire est positionné entre le support 4 et la sortie 21 de la flamme du brûleur.

L'extrémité 21 de sortie de la flamme du brûleur 3 est de forme circulaire avec un diamètre db, formant ainsi une surface de sortie Sb à l'extrémité 21. La totalité de la surface Sb du brûleur 3 recouvre moins de la totalité, et notamment moins de 50%, de la surface disponible extérieure du produit alimentaire 1.

Exemple de réalisation

Une escalope de foie gras cru d'un poids d'environ 50 g, avec environ 60 % en poids de matière grasse, est positionnée sur un support du type convoyeur à maille inox, entre deux brûleurs. Cette escalope est sensiblement allongée et comprend deux faces.

Les deux brûleurs sont espacés l'un de l'autre de quelques dizaine de centimètres. Cet intervalle entre les deux brûleurs permet de retourner, de façon manuelle ou automatisée, l'escalope de foie gras, de sorte à traiter thermiquement la première face à l'aide du premier brûleur (i.e. première flamme), puis la seconde face à l'aide du second brûleur (i.e. seconde flamme).

L'escalope se retrouve plus particulièrement dans les 20 à 80 % de la hauteur de chaque flamme. Ainsi pour une flamme de 180 mm, l'escalope se retrouve dans les 40 mm à 160 mm de la hauteur Hf (Zf = 160 - 40 = 120 mm).

Chaque brûleur a un diamètre de sortie de flamme de 20 mm.

Chaque brûleur est alimenté par un mélange de dioxygène ($O_2$) (comburant) et de méthane ($CH_4$) (combustible), le méthane ayant un pouvoir calorifique (PCI) de 9,4 kWh/m$^3$.

Le rapport volumique du mélange dioxygène / méthane est tel que $\frac{Vcomburant}{Vcombustible} = 5,6.$

La température à laquelle le traitement thermique de l'invention est réalisé est de 10°C.

Le temps d'exposition pour chaque face de l'escalope de foie gras est de 3,6 secondes, soit une exposition totale aux deux flammes de 7,2 secondes.

Après ce traitement thermique conforme à l'invention, l'escalope de foie gras présente une couche colorée homogène sur toute sa surface extérieure, tout en restant cru à l'intérieur de son enveloppe marquée thermiquement. La perte de matière grasse après traitement est de l'ordre de 8-10 %.

**Revendications**

**1.** Procédé de marquage d'un produit alimentaire (1) comprenant l'étape de traiter thermiquement au moins une partie de la surface extérieure du produit alimentaire à l'aide d'une flamme (2) formée par le mélange d'un combustible et d'un comburant, **caractérisé en ce que** le pouvoir calorifique du combustible est d'au moins 3,0 kWh/m$^3$, et **en ce que** $\frac{Vcomburant}{Vcombustible} > 1,0,$ avec Vcomburant étant le pourcentage en volume de comburant et Vcombustible étant le pourcentage en volume de combustible.

**2.** Procédé selon la revendication 1, **caractérisé en ce que** le pouvoir calorifique du combustible est d'au moins 5,0 kWh/m$^3$, et de préférence d'au moins 8,0 kWh/m$^3$.

**3.** Procédé selon la revendication 1 ou 2, **caractérisé en ce que** $\frac{Vcomburant}{Vcombustible} \geq 2,0,$ de préférence

$$\frac{Vcomburant}{Vcombustible} \geq 4,0,$$ et de façon particulièrement préférée $$\frac{Vcomburant}{Vcombustible} \geq 5,0.$$

4. Procédé selon l'une quelconque des revendications précédentes, **caractérisé en ce que** le comburant est du dioxygène ($O_2$).

5. Procédé selon l'une quelconque des revendications précédentes, **caractérisé en ce que** le combustible est choisi parmi le méthane, le propane, le butane, et un de leurs mélanges.

6. Procédé selon l'une quelconque des revendications précédentes, **caractérisé en ce que** la flamme est directement en contact physique avec la partie de la surface du produit alimentaire à traiter.

7. Procédé selon l'une quelconque des revendications précédentes, **caractérisé en ce que** le produit alimentaire comprend au moins 10% en poids de matière grasse, et de préférence au moins 20% en poids de matière grasse, par rapport au poids total du produit alimentaire.

8. Procédé selon l'une quelconque des revendications précédentes, **caractérisé en ce que** le produit alimentaire est choisi parmi du foie gras, du canard, et leur combinaison.

**Fig. 1**

Europäisches Patentamt
European Patent Office
Office européen des brevets

**RAPPORT DE RECHERCHE EUROPEENNE**

Numéro de la demande

EP 16 15 3940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 2 338 055 A (PADLEY G W HOLDINGS LTD [GB]) 8 décembre 1999 (1999-12-08) * page 2, ligne 19 - page 4, ligne 24; revendications; figures * ----- | 1-8 | INV. A47J37/06 A23L5/10 A22C17/10 |
| X | US 2008/181996 A1 (YOTHER CECIL [US]) 31 juillet 2008 (2008-07-31) * alinéa [0024] - alinéa [0025] * * alinéa [0055] * * alinéa [0063] * ----- | 1-8 | |
| X | anonymous: "Which torch to buy for finishing sous vide meat? Butane or propane?", Seasoned advice , 9 novembre 2010 (2010-11-09), XP002748148, Extrait de l'Internet: URL:http://cooking.stackexchange.com/questions/8965/which-torch-to-buy-for-finishing-sous-vide-meat-butane-or-propane [extrait le 2015-10-22] * le document en entier * ----- | 1-8 | |
| X | Chris young: "Torch tastes", Modernist Cuisine , 18 février 2011 (2011-02-18), XP002748149, Extrait de l'Internet: URL:http://modernistcuisine.com/2011/02/torch-tastes/ [extrait le 2015-10-22] * le document en entier * ----- | 1-8 | DOMAINES TECHNIQUES RECHERCHES (IPC) A23L A22C A47J |

-/--

Le présent rapport a été établi pour toutes les revendications

| Lieu de la recherche | Date d'achèvement de la recherche | Examinateur |
|---|---|---|
| La Haye | 9 juin 2016 | Leprêtre, François |

Europäisches Patentamt
European Patent Office
Office européen des brevets

**RAPPORT DE RECHERCHE EUROPEENNE**

Numéro de la demande

EP 16 15 3940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Anonymous: "Super chic foie gras mi-cuit à la flamme", La Plus Petite Cuisine du Monde , 4 décembre 2012 (2012-12-04), XP002748150, Extrait de l'Internet: URL:http://la-plus-petite-cuisine-du-monde.com/2012/12/04/super-chic-foie-gras-mi-cuit-a-la-flamme/ [extrait le 2015-10-22] * le document en entier * ----- | 1-8 | |
| X | Anonymous: "Foie gras au chalumeau", Papilles et Pupilles , 4 décembre 2014 (2014-12-04), XP002748151, Extrait de l'Internet: URL:http://www.papillesetpupilles.fr/2014/12/foie-gras-au-chalumeau.html/ [extrait le 2015-10-22] * le document en entier * ----- | 1-8 | |
| A | Jacques Michotte: "L'excès d'air dans la combustion peut nuire à la santé de votre portemonnaie!", 3j-Consult s.a. , 8 novembre 2011 (2011-11-08), XP002748152, Extrait de l'Internet: URL:http://energie.wallonie.be/servlet/Repository/possibilites-et-limites-des-echangeurs-de-chaleur.pdf?ID=25675&saveFile=true [extrait le 2015-10-23] * page 1 - page 2 * ----- | 1-8 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 9 juin 2016 | Leprêtre, François |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 15 3940

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-06-2016

| Document brevet cité au rapport de recherche | | Date de publication | Membre(s) de la famille de brevet(s) | | Date de publication |
|---|---|---|---|---|---|
| GB 2338055 | A | 08-12-1999 | AU | 4153199 A | 20-12-1999 |
| | | | DE | 69902530 D1 | 19-09-2002 |
| | | | DE | 69902530 T2 | 10-04-2003 |
| | | | EP | 1082574 A1 | 14-03-2001 |
| | | | ES | 2182529 T3 | 01-03-2003 |
| | | | GB | 2338055 A | 08-12-1999 |
| | | | GB | 2354818 A | 04-04-2001 |
| | | | WO | 9963269 A1 | 09-12-1999 |
| US 2008181996 | A1 | 31-07-2008 | AUCUN | | |

EPO FORM P0460

Pour tout renseignement concernant cette annexe : voir Journal Officiel de l'Office européen des brevets, No.12/82

**EP 3 056 123 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011157921 A